# EUROPEAN PATENT SPECIFICATION

(11) **EP 1 864 066 B1**
(45) Date of publication and mention of the grant of the patent: **18.05.2016**
(21) Application number: 06717063.9
(22) Date of filing: 29.03.2006
(51) Int. Cl.: F26B 25/22, B27K 5/00, F26B 21/10, F26B 3/04, F26B 9/06, F26B 21/06

(54) **METHOD FOR DRYING WOOD**
VERFAHREN ZUM TROCKNEN VON HOLZ
PROCEDE DE SECHAGE DU BOIS

(30) Priority: 01.04.2005 SE 0500705
(43) Date of publication of application: 12.12.2007
(73) Proprietor: Coldbay AB, 975 95 Luleå (SE)
(72) Inventor: BJÖRKMAN, Eric, S-975 95 Luleå (SE); ERICSSON, Stefan, S-975 95 Luleå (SE)
(74) Representative: Awapatent AB
(86) International application number: PCT/SE2006/000382
(87) International publication number: WO 2006/104447

(56) References cited:
- EP-B1- 0 142 071
- WO-A1-97/08504
- US-A- 1 796 141
- US-A- 3 896 558
- US-A- 3 940 860
- US-A1- 2001 015 020
- US-A1- 2003 099 275

## Description

### Technical Field of the Invention

The present invention relates to a method for drying wood in a compartment kiln, the wood during an initial drying phase on one hand being supplied with heat and on the other hand being subjected to an air change. The present invention may be used in all types of compartment kilns that use air change. From an energy saving aspect an optimum effect is present in compartment kilns having a combination of air change and condensation where the inlet air is supplied through a condensation panel, the water in the circulating drying air condensate on the surface of the condensation panel simultaneously as the inlet air is heated before its entry in the chamber. Of course the invention is also applicable in connection with compartment kilns having only air change.

### Prior Art

Due to their structure drying kilns are divided into compartment kilns and progressive kilns. The drying of the wood is controlled by actuation from the drying climate, i.e. the temperature, the humidity (represented in connection with drying by wet-bulb temperature and dry-bulb temperature) and air velocity for the air passing through the wood batch.

In a compartment kiln the drying climate is time regulated according to a preset scheme for different types and dimensions of wood and where different grade and principle for dynamic change of the scheme is present. There are also control systems that are not based on a scheme but where the entire drying process is continuously calculated. Common for all those principles is that the drying climate follows a similar course, see figure A.

The drying is from a time point divided into different phases. During the preheating the chamber air and the wood is heated and water vapour is also supplied in the chamber air to accelerate the heating and prevent the drying to start before the wood is sufficiently heated. Then the drying starts by ventilating the humid air out of the chamber. In the beginning of the drying process free water escapes from the wood and during this period it is in practice the capacity of the kiln, as regards heat supply, wind velocity and ventilation flow, that gives a limit for the drying rate of the wood. At the end of the drying process the water that is bound in the fibres of the wood is to be removed. This takes much longer time and induces a risk of cracking of the wood since the wood shrinks when the bound water escapes from the fibres. The water escapes from the fibres via a diffusion process from the humid core to the dryer wood surface of a wood cross-section. A moisture gradient is established in the wood cross-section, said moisture gradient generating this diffusion moisture migration. The surface of the wood becomes dryer and thus it will shrink, this inducing tensile stress in the surface and compression stress in the inner portion of the wood piece. It is also known that an increased inner stress in the wood increases the drying rate, the so called mecanosorption effect. During drying the cross-section will become warped having a cup centre portion and being bent. The drying schemes are designed in such a way that the gradient is as high as possible, and consequently the drying rate as high as possible, without running the risk of cracking of the wood. The steaming, i.e. supply of water vapour in the circulating air, may become necessary during the later phase of the drying in order to prevent that the drying climate becomes too tough during too long time. Quite a lot of extra energy is needed to steam to maintain the climate. The control system uses heat supply, ventilation and steaming to be able to follow the drying scheme. The drying is terminated by a conditioning phase to even the moisture content in the wood to relieve the stresses and to have the cross-section geometry restored.

In compartment kilns the humidity may be regulated by two principles, i.e. by air change or alternatively by condensation or a combination of both methods. When using air change humid hot air is ventilated and replaced by inlet air.

From US-A-1,796,141 a process for drying lumber and other moisture containing materials is previously known. The process includes periods of entering dry heated air, this being effected by a fan that draws out the air that is in the drying chamber. Then the fan is stopped and the temperature of the entered air initially drops but eventually reattains the temperature at which it was entered. Then the fan is again set in motion and the hot moisture laden air replaced by warm, dry air.

From EP 0 142 071 B1 a method for drying saw wood is previously known. By means of fans driven by frequence converter-controlled three-phase motors an air flow is guided through saw wood layers which are stacked spaced apart in a drying chamber, said air flow being conditioned by means of a heating device and a dehumidifying device and being reversed after a predetermined reversing time by reversing the fans. The air flow is reversed after a maximum reversing time of approx. 30 min.

From US-A-3,896,558 a method for controlling drying of timber in a closed room is previously known. According to the method the humidity of the timber is sensed and compared to a reference value, initiating ventilation of the chamber when a certain difference relationship exists between the sensed humidity and said reference value, discontinuing ventilation when another difference relationship exists, effecting further ventilation when a certain difference relationship exists between the sensed humidity and said reference value, determining the rate at which actual humidity in the drying chamber changes per unit of time during the interval between the cessation of ventilation and initiation of ventilation, and changing the reference value when the rate determined falls outside a certain range.

From US-A-3,940,860 a method and apparatus for drying wood is previously known. However, this document is primarily directed to an initial drying phase of the total drying process. The present invention is primarily directed to a subsequent drying phase, i.e. the drying phase that follows the initial drying phase.

### Objects and Features of the Invention

A primary object of the present invention is to present a method for drying wood where the drying process is faster compared to prior art.

A further primary object of the present invention is to make the drying process more energy saving compared to prior art.

A further object of the present invention is to refrain from steaming, i.e. supply of water vapour in the circulating air, during the drying process.

At least the primary objects of the present invention are realized by means of a method that has been given the features of the appending independent claim 1. Preferred embodiments of the invention are defined in the dependent claims.

### Brief Description of the Drawings

Reference to the figures of the drawings has been made above when describing prior art and will be made below when describing the present invention, the figures showing:
Figure A a drying diagram of a drying process according to prior art;
Figure 1 a schematic side view of a compartment kiln;
Figure 2 a schematic top view of a compartment kiln;
Figure 3 a graph of a drying process according to the present invention; and
Figure 4 an enlarged detail of the graph according to figure 3.

### Detailed Description of a Preferred Embodiment of the present Invention

In order to provide a drying process according to the present invention the control system of the drying kiln must be programmed in a new way. Conventional control means that a regulating valve of an element that holds hot water is controlled in such a way that the dry-bulb temperature follows a desired value scheme (continuous time course). The air change/ventilation is controlled in such a way that the wet-bulb temperature follows a similar course but often at a level 5-25 degrees lower. The wet-bulb temperature gives in combination with the dry-bulb temperature a defined condition to calculate the relative humidity in the drying chamber. The circulation fans run continuously and change direction with intervals of 10-120 minutes. The drying process, i.e. the dry-bulb temperature and the wet-bulb temperature in relation to the time, looks like in figure A.

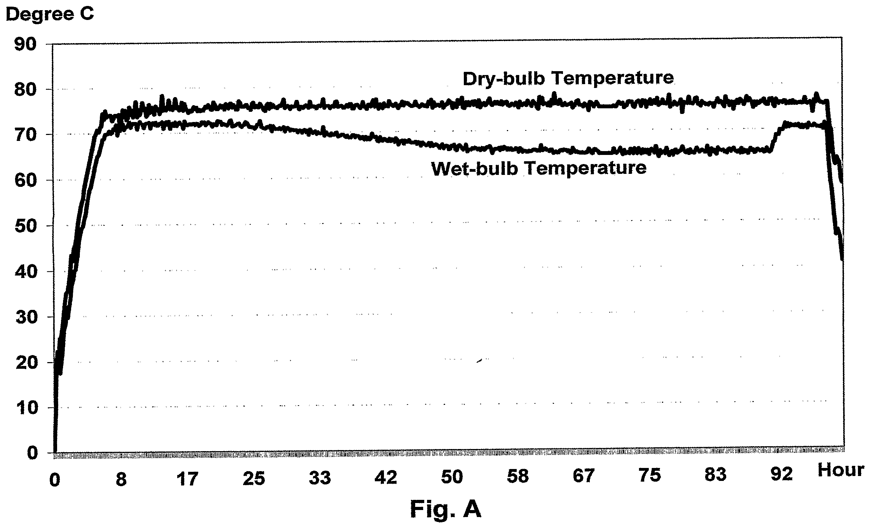

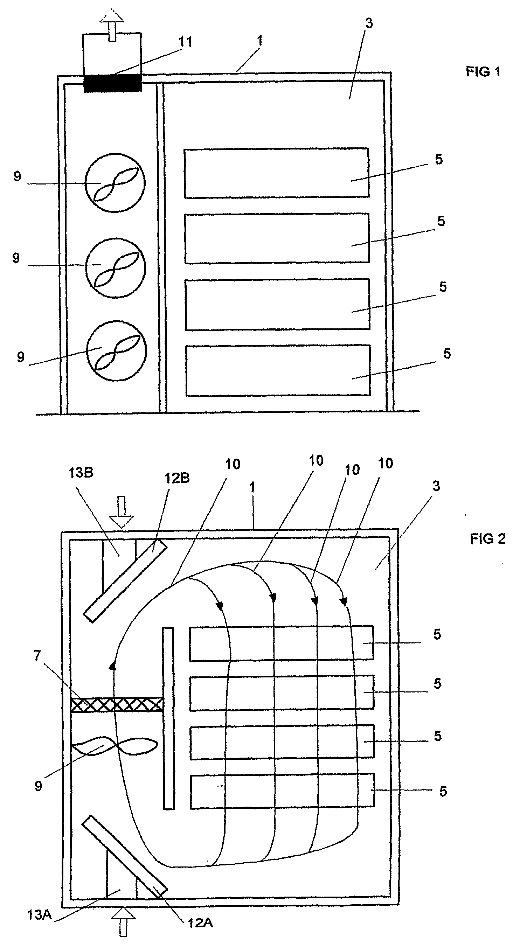

In figure 1 and 2 schematic views of a compartment kiln is shown, said kiln comprising an outer housing 1, inside which a drying chamber 3 is provided. A number of wood bundles 5 are arranged inside the drying chamber 3. The compartment kiln also comprises a heating coil 7, through which heated water circulates. In connection with the heating coil 7 there is a regulating valve, not shown. In connection with the heating coil 7 a number of fans 9 are provided, said fans 9 being reversible, i.e. they may generate air circulation in two opposite directions. Air circulation in one direction is illustrated in figure 2 by means of the arrow loops 10. A damper 11 is provided in connection to a portion above the fans 9 and humid air is discharged through said damper 11. The compartment kiln also comprises two condensation panels 12A and 12B, an inlet air intake 13A being provided in connection to one condensation panel 12A and a further inlet air intake 13B being provided in connection to the other condensation panel 12B. Which inlet air intake 13A or 13B that is used depends on the direction of the air circulation in the compartment kiln.

The principle of the present invention is that during an initial phase the drying process is performed in a conventional way, e.g. in accordance with what has been described above. The conventional drying continues up to when the free water has escaped from the wood. This normally takes 1-1,5 days and nights (24-36h). Then the drying process continues in a way that will be described below. In connection therewith it is suitable that the steaming function is shut off.

Generally, this continued drying process means that periods of hard drying alternate with periods of less hard/gentle drying, the last-mentioned periods in the present application being defined as rest periods.

During the first period of hard drying the air is circulated in a certain direction in the drying chamber at a high, preferably maximum velocity. This air circulation is generated by the fans 9. During this first period the air change/ventilation is high, preferably at maximum. This means that the wet-bulb temperature starts to fall. The dry-bulb temperature is regulated normally, which means that the regulating valve of the heat coil 7, with heated water, opens to keep the dry-bulb temperature at a high level. After a certain time, normally about 10-30 minutes, alternatively when the wet-bulb temperature has fallen to a certain level, the air change is interrupted by closing of the damper 11. Then the first rest period will occur.

During the first rest period the direction of the circulation of the air is changed. In connection therewith the air is flowing at a low, preferably minimum, velocity in opposite direction compared to the first period of hard drying. Alternatively, the circulation fans 9 may be completely shut off.

The wet-bulb temperature is normally measured by means of a temperature gauge that is surrounded by a wet piece of cloth and these temperature gauges demand a certain wind velocity to function. In such drying kilns the fans 9 should not be shut off. The dry-bulb temperature is regulated normally, which means that the regulating valve will be closed to a minimum position after a while. This means that the heat supply is kept at a low level, preferably at a minimum level. After a certain time, 30-90 minutes, or when the wet-bulb temperature has risen to a certain level, the rest period is interrupted.

During the second period of hard drying the air is circulated at a high, preferably maximum, velocity in the same direction as the during the first rest period. The air change is brought to a high, preferably maximum, level and the wet-bulb temperature begins to fall. The dry-bulb temperature is regulated normally, which means that the regulating valve is open to maintain the dry-bulb temperature at a high level, i.e. the heat supply is at a high level. After a certain time, normally about 10-30 minutes, alternatively when the wet-bulb temperature has fallen to a certain level, the air change is interrupted and the second rest period occurs.

During the second rest period the direction of the air circulation is changed. Low, preferably the lowest, air velocity or alternatively that the circulation fans 9 are completely shut off. The dry-bulb temperature is regulated normally, which means that the regulating valve will close to a minimum position after a while, i.e. the heat supply is maintain at a low, preferably minimum, level. After a certain time, normally about to 30-90 minutes, or when the wet-bulb temperature rises to a certain level, the second rest period is interrupted.

During the third period of hard drying the air is circulated at high, preferably maximum, velocity in the same direction as during the second rest period. The air change is brought to a high, preferably maximum, level and the wet-bulb temperature starts to fall. The dry-bulb temperature is regulated normally, which means that the regulating valve is opened to keep the dry-bulb temperature at a high level, i.e. the heat supply is at a high, preferably maximum, level. After a certain time, normally about 10-30 minutes, alternatively when the wet-bulb temperature has fallen to a certain level, the air change is interrupted and the third rest period occurs.

In this way the drying process continues with alternating periods of hard drying and rest. The drying process is interrupted when the moisture ratio in the dried wood has fallen to a desired level.

The periods of hard drying may be shorter or longer when the drying continues. As regards the mutual ratio between the length of the periods of hard drying and the length of the rest periods the following may be said. A prolongation of the of the periods of hard drying and shortening of the periods of rest give a high drying rate but also an increased risk of drying cracks. How this ratio is controlled depends on the wood and if the drying rate has higher priority than the quality. Normally, the rest periods should be longer towards the end of the drying.

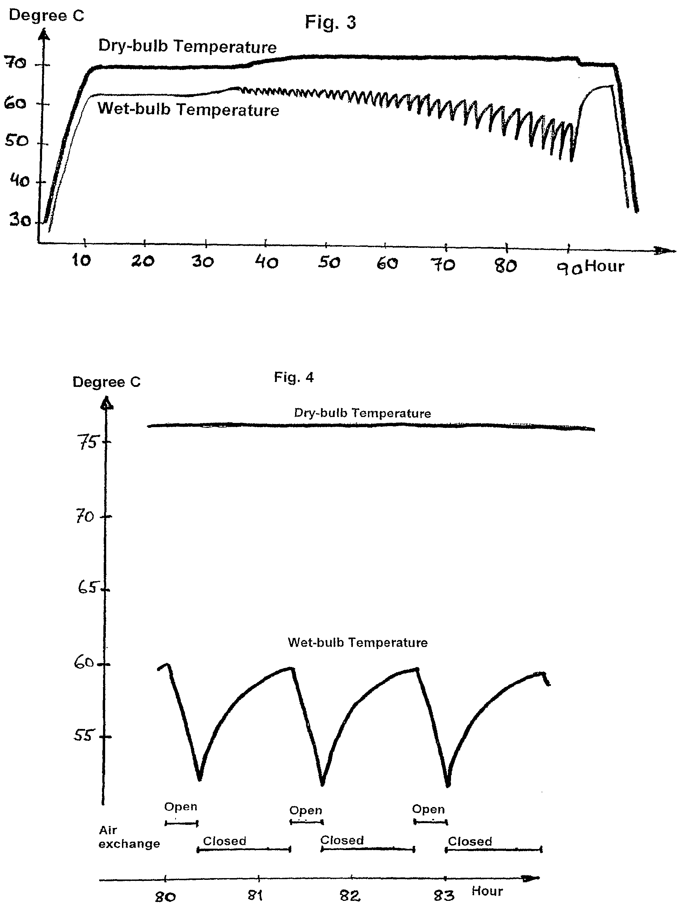

The drying process according to the present invention will be depicted schematically in figures 3 and 4. The first 10 hours that are shown in figure 3 constitute a heating phase that is not a part of the drying process. The initial drying phase extends normally between 10h and 30h, i.e. about one day and night (24h). The subsequent drying phase extends between 35h and 100h, i.e. about 2,5-3 days and nights (65h).

The wet-bulb temperature has a saw-toothed appearance during the later phase of the drying and the dry-bulb temperature becomes almost linear if the dry-bulb temperature is regulated as in a conventional drying kiln, i.e. follows a desired value all the time. In figures 3 and 4 the dry-bulb temperature is almost linear and essentially constant during the entire drying. Which part to of figure 3 that is shown in figure 4 is evident from the temperature axis.

From figure 3 is also evident that during the initial drying phase the difference in degrees between the dry-bulb temperature and the wet-bulb temperature is essentially constant.

From figure 4 is evident that the wet-bulb temperature falls significantly during periods of hard drying. During these periods air change is effected, i.e. the damper 11 is open and hence the ventilation is open. From figure 4 is also evident that during the periods of less hard drying/the rest periods the wet-bulb temperature rises significantly. The during the rest periods the air change is interrupted, i.e. the damper 11 is closed. From figure 4 is generally evident that the rest periods are longer than the periods of hard drying.

When drying is effected according to the present invention the need of a terminating conditioning phase is not present or at least the need of a terminating conditioning phase is reduced significantly. The reason therefore is that the repeated rest periods of the method according to the present invention constitute short conditioning phases in themselves.

Since the air circulation is low or completely shut off during the rest periods the method according to the present invention saves large amounts of electric energy compared to prior art.

In case the compartment kiln that is used is equipped with a condensation panel, said panel is used to a maximum in connection with the present invention since the air change in periods is at maximum or interrupted.

### Feasible Modifications of the Invention

The preferred embodiment described above of the method according to the present invention includes a change of the direction of the air circulation when transferring from a period of hard drying to a period of rest. Within the scope of the present invention it is also feasible that the direction of the air circulation is changed in the middle of a period of hard drying or in the middle of a period of rest. Hence, is not necessary to change the direction of the air circulation when transferring from a period of hard drying to a rest period or vice versa. Of course this is also the case if there is an air circulation also during the rest periods.

Heat is supplied during periods of hard drying according to the preferred method of the present invention described above. According to an alternative method within the scope of the present invention the heat supply is shut off during periods of hard drying and the dry-bulb temperature in the temperature-time graph will be represented by a saw-toothed line. In such an alternative the heat supply is instead effected during the rest periods.

Within the scope of the present invention it is also feasible that heat supply is effected both during periods of hard drying and the rest periods.

There is no air change during the rest periods according to the described preferred embodiment of the present invention. However, within the scope of the present invention it is feasible that there is an extremely restricted air change also during the rest periods. In this connection it should be mentioned that there is always a certain leakage between the compartment kiln and its environment.

## Claims

1. Method for drying wood in a compartment kiln, the wood during an initial drying phase on one hand being supplied with heat and on the other hand being subjected to an air change, wherein air change comprises humid hot air being ventilated and replaced by inlet air, such that the difference in degrees between the dry-bulb temperature and the wet-bulb temperature is essentially constant during this initial drying phase, wherein during a subsequent phase of the drying the wood is subjected to periods of hard drying, wherein during these periods of hard drying air change is effected, and wherein
between the periods of hard drying the wood is subjected to periods of less hard drying,
said method being **characterised in that** the periods of less hard drying have less air change than the periods of hard drying,
the heat supply is shut off during the periods of hard drying.

2. Method according to claim 1, **characterised in that** during the periods of less hard drying no air change is effected.

3. Method according to any of the previous claims, **characterised in that** during periods of less hard drying no air circulation is effected.

4. Method according to any of claims 1-2, **characterised in that** during periods of less hard drying air circulation is effected.

5. Method according to any of the claims 1-2 and 4, **characterised in that** the direction of the air circulation is reversed when transferring from a period of hard drying to a period of less hard drying.

6. Method according to any of the previous claims, **characterised in that** the periods of less hard drying are longer than the periods of hard drying.

7. Method according to any of the previous claims, **characterised in that** the periods of less hard drying are made longer towards the end of the drying.

## Patentansprüche

1. Verfahren zum Trocknen von Holz in einem Trockenkammerofen, wobei das Holz während einer anfänglichen Trocknungsphase einerseits mit Wärme versorgt wird und andererseits einem Luftaustausch unterzogen wird, wobei der Luftaustausch umfasst, dass feuchte heiße Luft entlüftet wird und durch Einlassluft ersetzt wird, sodass der Unterschied hinsichtlich der Gradzahl zwischen der Trockentemperatur und der Feuchttemperatur während dieser anfänglichen Trocknungsphase im Wesentlichen konstant ist, wobei während einer anschließenden Phase der Trocknung das Holz Zeiträumen einer Harttrocknung unterzogen wird,
wobei während dieser Zeiträume einer Harttrocknung ein Luftaustausch erfolgt und wobei zwischen den Zeiträumen der Harttrocknung das Holz Zeiträumen einer geringeren Harttrocknung unterzogen wird,
wobei das Verfahren **dadurch gekennzeichnet ist, dass** die Zeiträume einer geringeren Harttrocknung einen geringeren Luftaustausch aufweisen als die Zeiträume der Harttrocknung,
wobei die Wärmezufuhr während der Zeiträume der Harttrocknung abgeschaltet wird.

2. Verfahren nach Anspruch 1, **dadurch gekennzeichnet, dass** während der Zeiträume einer geringeren Harttrocknung kein Luftaustausch stattfindet.

3. Verfahren nach einem der vorhergehenden Ansprüche, **dadurch gekennzeichnet, dass** während der Zeiträume einer geringeren Harttrocknung keine Luftzirkulation stattfindet.

4. Verfahren nach einem der Ansprüche 1 bis 2,**dadurch gekennzeichnet, dass** während der Zeiträume einer geringeren Harttrocknung eine Luftzirkulation stattfindet.

5. Verfahren nach einem der Ansprüche 1 bis 2 und 4, **dadurch gekennzeichnet, dass** die Richtung der Luftzirkulation beim Übergang von einem Zeitraum der Harttrocknung zu einem Zeitraum einer geringeren Harttrocknung umgekehrt wird.

6. Verfahren nach einem der vorhergehenden Ansprüche, **dadurch gekennzeichnet, dass** die Zeiträume einer geringeren Harttrocknung länger sind als die Zeiträume der Harttrocknung.

7. Verfahren nach einem der vorhergehenden Ansprüche, **dadurch gekennzeichnet, dass** die Zeiträume einer geringeren Harttrocknung zum Ende der Trocknung verlängert werden.

## Revendications

1. Procédé de séchage de bois dans un four à compartiment, le bois étant d'une part, pendant une phase de séchage initial, alimenté en chaleur et d'autre part soumis à un changement d'air, ce changement d'air comprenant la ventilation de l'air chaud humide et son remplacement par de l'air d'admission de manière à ce que la différence en degrés entre la température au thermomètre sec et la température au thermomètre humide soit sensiblement constante pendant cette phase de séchage initial,
dans lequel, pendant une phase suivante de séchage, le bois est soumis à des périodes de séchage à sec, sachant que, pendant ces périodes de séchage à sec, un changement d'air est effectué, et dans lequel, entre les périodes de séchage à sec, le bois est soumis à des périodes de séchage à moins sec,
ledit procédé étant plus la ménagerie **caractérisé en ce que** le séchage à moins sec comprend moins de changement d'air que les périodes de séchage à sec,
l'apport de chaleur est coupé pendant les périodes de séchage à sec.

2. Procédé selon la revendication 1, **caractérisé en ce que**, pendant les périodes de séchage à moins sec, aucun changement d'air n'est effectué.

3. Procédé selon l'une quelconque des revendications précédentes, **caractérisé en ce que**, pendant les périodes de séchage à moins sec, aucune circulation d'air n'est effectuée.

4. Procédé selon l'une quelconque des revendications 1-2, **caractérisé en ce que**, pendant les périodes de séchage à moins sec, une circulation d'air est effectuée.

5. Procédé selon l'une quelconque des revendications 1-2 et 4, **caractérisé en ce que** la direction de la circulation d'air est inversée lors du passage d'une période de séchage à sec à une période de séchage à moins sec.

6. Procédé selon l'une quelconque des revendications précédentes, **caractérisé en ce que** les périodes de séchage à moins sec sont plus longues que les périodes de séchage à sec.

7. Procédé selon l'une quelconque des revendications précédentes, **caractérisé en ce que** les périodes de séchage à moins sec sont allongées vers la fin du séchage.
